Europäisches Patentamt

European Patent Office

Office européen des brevets

(19)

(11) Veröffentlichungsnummer : **0 353 436 B1**

(12) # EUROPÄISCHE PATENTSCHRIFT

(45) Veröffentlichungstag der Patentschrift :
**05.08.92 Patentblatt 92/32**

(51) Int. Cl.$^5$ : **B23Q 1/14, B23B 29/034**

(21) Anmeldenummer : **89110953.0**

(22) Anmeldetag : **16.06.89**

(54) **Einstellvorrichtung, insbesondere für Werkzeuge.**

(30) Priorität : **19.07.88 DE 3824462**

(43) Veröffentlichungstag der Anmeldung :
**07.02.90 Patentblatt 90/06**

(45) Bekanntmachung des Hinweises auf die
Patenterteilung :
**05.08.92 Patentblatt 92/32**

(84) Benannte Vertragsstaaten :
**AT BE CH DE ES FR GB GR IT LI LU NL SE**

(56) Entgegenhaltungen :
**EP-A- 0 058 646**
**EP-A- 0 251 405**
**DE-A- 2 228 553**

(56) Entgegenhaltungen :
**DE-A- 2 835 712**
**DE-A- 3 446 275**
**FR-A- 2 534 682**
**US-A- 4 351 207**

(73) Patentinhaber : **EBERHARD BAUER GMBH &
CO.**
**Eberhard-Bauer Strasse 36-59**
**W-7300 Esslingen (DE)**

(72) Erfinder : **Priessnitz, Alfred Dipl.-Ing.**
**Jusiweg 14**
**W-7300 Esslingen (DE)**

(74) Vertreter : **Rüger, Rudolf, Dr.-Ing. et al
Patentanwälte Dr.-Ing. R. Rüger Dipl.-Ing. H.P.
Barthelt Webergasse 3 Postfach 348
W-7300 Esslingen/Neckar (DE)**

## Beschreibung

Die Erfindung betrifft eine Einstellvorrichtung, insbesondere für rundlaufende Werkzeuge, mit den Merkmalen des Oberbegriffs des Anspruchs 1.

Die gattungsbildende US-A-4 351 207 beschreibt eine Einstellvorrichtung, die es gestattet, den Flugkreisdurchmesser eines Ausbohrwerkzeugs zu verstellen.

Die Einstellvorrichtung weist zwei zu dem Futterflansch der Maschinenspindel parallele Grundplatten auf. Eine Grundplatte ist an der Maschinenspindel angeflanscht, während die andere Grundplatte das Werkzeug trägt. Die beiden Grundplatten mit einander zugewandten Planflächen sind gegeneinander verschiebbar, wobei die Planflächen als Führung oder Lager dienen. An sich gegenüberliegenden Enden der werkzeugseitigen Grundplatte ist jeweils eine Blattfeder angebracht, die wiederum mit ihrem zweiten Ende jeweils an einem Block befestigt ist. Von den Blattfedern wird die werkzeugseitige Grundplatte in einer Mittelstellung gehalten. Die beiden Blöcke sind auf die maschinenseitige Grundplatte geschraubt. In der Welle der Werkzeugmaschine befindet sich eine Zugstange, die bei Betätigung über ein Keilgetriebe die werkzeugseitige Grundplatte aus ihrer Ruhelage gegen die Rückstellkraft der Blattfedern in radialer Richtung auslenkt. Die Endpunkte der Auslenkung werden auf beiden Seiten durch in den Blöcken angeordnete Einstellschrauben fixiert. Insgesamt erreicht man mit dieser Einstellvorrichtung eine radiale Zustellbewegung, die z.B. beim Innenausdrehen einer Bohrung vorteilhaft ist.

Die DE-A-28 35 712 beschreibt einen optoelektronisch arbeitenden Fühler, der zum Ausrichten von Werkstücken in einer Ebene dient.

Der Fühler weist eine Grundplatte auf, an der zwei parallele Blattfedern mit geringer Federkonstante befestigt sind. Die Blattfedern tragen wiederum an ihren anderen Enden eine weitere Grundplatte. Eine dritte Grundplatte ist mit um 90° versetzten Blattfedern an der zweiten Grundplatte befestigt und trägt einen Fühlerkopf. Es ergeben sich zwei Parallelogrammlenkeranordnungen, deren Grundplatten parallel gegeneinander verschoben werden, wenn der Fühlerkopf beispielsweise auf den Rand einer Bohrung trifft. Optoelektronische Bauelemente messen den Parallelversatz zwischen den Grundplatten und geben ein entsprechendes elektrisches Signal ab.

Ausgehend hiervon ist es Aufgabe der Erfindung, eine robuste und einfach herzustellende Einstellvorrichtung, insbesondere für rundlaufende Werkzeuge zu schaffen.

Diese Aufgabe wird erfindungsgemäß durch die Einstellvorrichtung mit den Merkmalen des Anspruchs 1 gelöst.

Weil zwei Federglieder vorgesehen sind, um die beiden Elemente miteinander zu kuppeln, sind keine kompliziert zu fertigenden Führungen erforderlich, um die notwendige Beweglichkeit der Elemente gegeneinander zu erzeugen. Vielmehr genügt eine Verwindung der Federglieder, um die gewünschte Lage der Elemente zueinander zu erhalten. Gleichzeitig ist die Verbindung der zwischen den Elementen mittels der Federglieder spielfrei, womit sich einfache Herstellungsverhältnisse ergeben.

Die erfindungsgemäße Einstellvorrichtung läßt sich einstückig besonders einfach dadurch herstellen, daß in einem Zwischenstück, das bevorzugt die beiden Elemente einstückig miteinander verbindet, ein oder zwei U-förmige Schlitze eingearbeitet sind, die bezüglich der Längsachse diametral liegende Seitenflächen des Zwischenstücks durchsetzen und jeweils aus zwei parallel zu der Längsachse verlaufenden Schenkeln sowie einem die Längsachse rechtwinklig schneidenden Basisstück bestehen. Solche Schlitze lassen sich durch eine entsprechend geformte Elektrode in einfachster Weise in das Zwischenstück erodieren, wobei nur geringe Anforderungen an die Fertigungsgenauigkeit gestellt werden. Das längliche Zwischenstück kann dabei sowohl einen rechteckigen als auch einen Kreisquerschnitt aufweisen.

Je nach Ausbildung der beiden parallel und mit Abstand voneinander angeordneten Federglieder ist eine Verstellung nur in einer oder auch in zwei Ebenen möglich. Wenn die Federglieder derart gestaltet sind, daß die nur in einer Ebene elastisch auslenkbar sind, die eine Längsachse eines der Elemente umfaßt, während sie in der dazu rechtwinkligen Ebene, die ebenfalls die Längsachse enthält, weitgehend starr sind, ergibt sich eine Parallelogrammführung, mit deren Hilfe die beiden Elemente ausschließlich in einer Ebene gegeneinander versetzbar sind. Falls dies nicht ausreicht, wenn Lagetoleranzen in beliebigen Richtungen auftreten können, besteht die einfache Möglichkeit, einen weiteren Satz von gleich ausgebildeten Federgliedern zu verwenden, die jedoch, bezogen auf die Längsachse der Elemente, um 90° gegenüber der ersten gedreht angeordnet sind.

Zufolge einer parallelen Anordnung der Federglieder innerhalb jedes Paares, die ähnlich Bandfedern gestaltet sind, ergibt sich zwangsläufig ein exakt paralleler Versatz der Element gegeneinander.

Die Feststellmittel zur Fixierung der Federglieder gegenüber den Widerlagermitteln sind im einfachsten Falle Feststellschrauben, die bevorzugt in Gewindelöchern sitzen, die sich in den Federgliedern befinden.

In der Zeichnung ist ein Ausführungsbeispiel des Gegenstandes der Erfindung dargestellt. Es zeigen:

Fig. 1 die Einstellvorrichtung gemäß der Erfindung in einer Seitenansicht und teilweise geschnitten und

Fig. 2 die Einstellvorrichtung nach Fig. 1 geschnitten längs der Linie II-II aus Fig. 1 in einer Draufsicht.

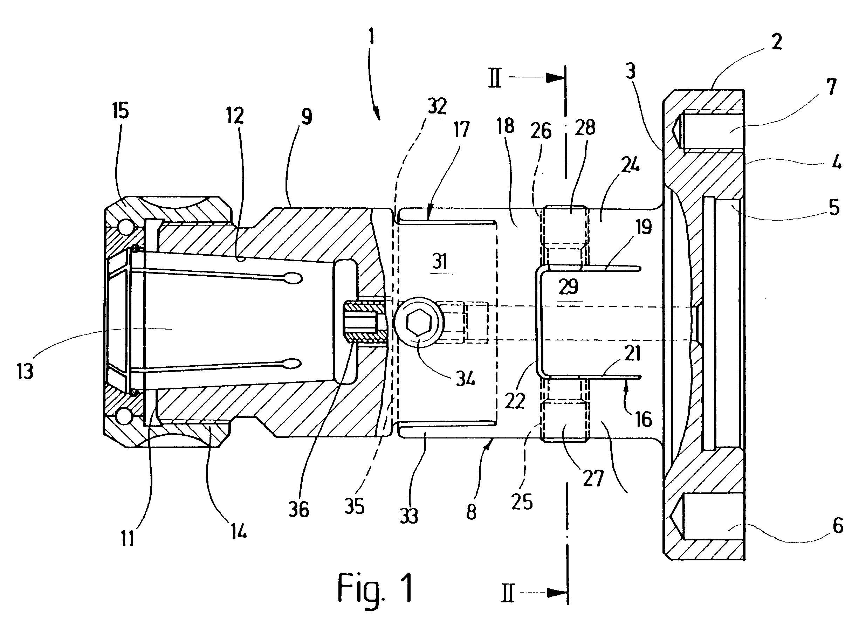

In Fig. 1 ist als Beispiel für die neue Einstellvorrichtung eine Spannzangenaufnahmevorrichtung 1 veranschaulicht, die auf einem Aufnahmeflansch einer nicht weiter gezeigten Maschinenspindel aufzusetzen und zu befestigen ist. Die Spannzangenaufnahmevorrichtung trägt an einem Enden einen scheibenförmigen Befestigungsflansch 2 mit zwei zueinander parallelen Stirnseiten 3 und 4. In der plangeschliffenen Stirnseite 4 ist koaxial zu der Längsachse des Befestigungsflansches 2 eine zylindrische Zentrierbohrung 5 vorhanden, die es gestattet, den Befestigungsflansch mit sehr kleiner Toleranz auf eine Werkzeugaufnahme aufzusetzen. Seitlich neben der Zentrierbohrung 5 befindet sich eine Indexbohrung 6 sowie vier Gewindebohrungen 7, mittels derer der Befestigungsflansch an der Werkzeugaufnahme festzuschrauben ist.

Mit der Stirnfläche 3 ist ein prismatischer, im speziellen Falle zylindrischer Schaft 8 einstückig verbunden, dessen Längsachse im wesentlichen mit der Längsachse des Befestigungsflansches fluchtet. An seinem dem Befestigungsflansch abgelegenen Ende 9 enthält er in seiner zu de Stirnfläche 4 parallelen Stirnfläche 11 eine konische, sich in Richtung auf den Befestigungsflansch 2 verjüngende Bohrung 12 für eine darin sitzende, in Längsrichtung geschlitzte Spannzange 13, die als Druckspannzange ausgebilder ist und die übliche Gestalt hat. In der Nähe der Stirnseite 11 ist der Schaft 8 mit einem zylindrischen Außengewinde 14 versehen, auf das eine Überwurfmutter 15 aufzuschrauben ist, um die Spannzange 13 in der konischen Bohrung 12 festzuklemmen.

Das zylindrische Ende 9 und der Befestigungsflansch 2 bilden zwei achsparallel gegeneinander zu verstellende Elemente der neuen Einstellvorrichtung. Um diese Verstellbarkeit zu schaffen, enthält der zylindrische Schaft 8 zweit im Querschnitt U-förmige und, bezogen auf die Längsachse des zylindrischen Schaftes 8, rechtwinklig angeordnete, U-förmige Schlitze 16 und 17. Diese beiden U-förmigen Schlitze 16 und 17, die, bezogen auf die Längsachse, gekreuzt angeordnet sind, haben dieselbe Gestalt und sind in Längsrichtung des zylindrischen Schaftes 8 höhenversetzt, so daß zwischen ihnen ein scheibenförmiges Zwischenstück 18 entsteht, das frei von Teilen der beiden Schlitze 16 und 17 ist.

Der U-förmige Schlitz 16, der den zylindrischen Schaft 8 vollständig von einer bis zu der diametral gegenüberliegenden Seite hin durchsetzt, wird von zwei zueinander parallelen Schenkeln 19 und 21 sowie einem zu den beiden Schenkeln 19 und 21 rechtwinklig verlaufenden ebenen Basisabschnitt 22 begrenzt. Wegen der Lage der U-förmigen Schlitzes 16 verlaufen die beiden Schenkel 19 und 21 an diametralen Seiten der Längsachse des Schaftes 8 mit einem Radius, der etwa halb so groß ist wie der Radius des Schaftes 8. Sie erstrecken sich parallel zu der Längsachse der Schaftes 8, während der gerade verlaufende Basisabschnitt 22 die Längsachse rechtwinklig schneidet. Die Weiten des Schlitzes ist im Bereich seiner Schenkel 19 und 21 sowie des Basisabschnittes 22 überall gleich und beträgt zwischen 1 und maximal 2 mm, d.h. sie ist klein gegenüber dem Durchmesser des zylindrischen Schaftes 8.

Den Abstand, den die beiden geraden Schenkel 19 und 21 voneinander haben, ist etwa gleich ihrer Länge, gemessen parallel zu der Längsachse des Schaftes 8.

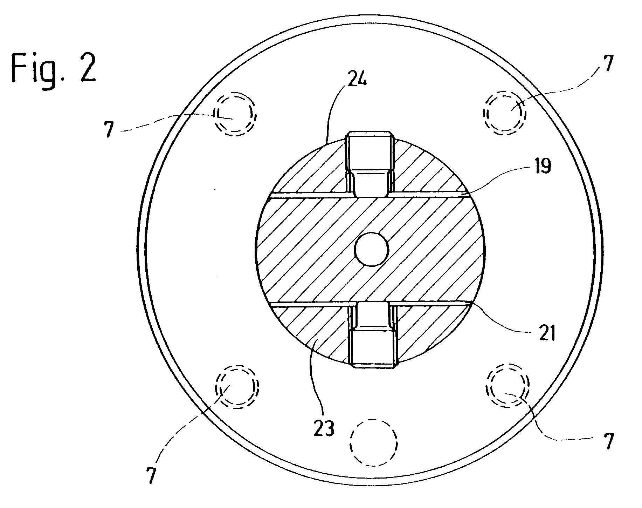

Fig. 2 läßt deutlich erkennen, wie die beiden Schenkel 19 und 21 des U-förmigen Schlitzes 16 vollständig durch den Schaft 8 von einer bis zu der anderen Seite durchlaufen, derart, daß das Zwischenstück 18 mit dem Befestigungsflansch 2 über zwei im Querschnitt kreissegmentförmige Glieder 23 und 24 einstückig verbunden ist. Infolge des Materials, das für die Spannzangenaufnahmevorrichtung verwendet ist, sind die beiden Glieder 23 und 24 elastisch auslenkbar, und zwar haben Sie wegen der nicht rotationssymmetrischen Querschnittsfläche eine geringere Nachgiebigkeit in Richtung senkrecht zu den Schenkeln 19 und 21, während sie eine große Festigkeit in Richtung parallel dazu zeigen. Sie sind deswegen Federglieder, die die Charakteristik von Bandfedern aufweisen. Das Zwischenstück 18 ist folglich mit dem Befestigungsflansch 2 über zwei parallel zueinander verlaufenden Federglieder mit Bandfedercharakteristik verbunden, d.h. das scheibenformige Zwiscgebstuck 18 und der Befestigungsflansch 2 können durch eine verhältnismäßig geringe Kraft gegeneinander in einer Ebenen bewegt werde, die parallel zu der Zeichenebene von Fig. 1 verläuft, während sie in Richtung senkrecht dazu unbeweglich sind. Wegen des parallelen Verlaufs der beiden Federglieder 23 und 24 ergibt sich ein achsparalleler Versatz zwischen dem scheibenförmigen Zwischenstück 18 und dem Befestigungsflansch 2.

Um eine definierte Lage zwischen dem scheibenförmigen Zwischenstück 18 und dem Befestigungsflansch 2 auch in Richtung parallel zu der Zeichenebene zu erhalten, sind in der nähe des Basisabschnittes 22 in den beiden Federgliedern 23 und 24 zwei miteinander fluchtende Gewindebohrungen 25 und 26 enthalten, die bis zu dem Schlitz 16 reichen. In diesen miteinander fluchtenden Gewindebohrungen 25 und 26 sitzen zwei Stiftschrauben 27 und 28, die sich an einem von dem Schlitz 16 umgrenzten Widerlager 29 abstützen. das Widerlager 29 ist ein mit dem Befestigungsflansch einstückig verbundener, im wesentlichen quaderförmiger Körper, der beim Einarbeiten des U-förmigen Schlitzes 16 innen stehen bleibt. Er weist eine sehr grobe Festigkeit in allen Richtungen auf, weshalb er tatsächlich die Funktion des Widerlagers für die Einstellschrauben 27 und 28 bringen kann.

Der Schlitz 17 hat dieselben Abmessungen wie der Schlitz 16, nur befindet er sich zwischen dem scheibenförmigen Zwischenstück 18 und dem die konische Bohrung 12 enthaltenden Ende 9 und ist zu dem Schlitz 16 bezüglich der Längsachse des zylindrischen Schaftes 8 gekreuzt angeordnet, wie dies Fig. 1 deutlich erkennen läßt. Kierdurch entstehen zwei gegenüber den Federgliedern 23 und 24 gekreuzt angeordnete Federglieder 31 bzw. 32 an der in Fig. 1 nicht sichtbar gegenüberliegenden Seite der Spannzangenaunahmevorrichtung 1. Zwischen den beiden Federgliedern 31 und 32 erstreckt sich, wie vorher, ein Widerlagerglied 33, an dem sich zwei auf gleicher Höhe sitzende Schrauben 34 abstützen, die unmittelbar in der nähe des geraden Basisabschnittes 35 auf dem Durchmesser des Schaftes 8 liegen und wie vorher in der gleichen Weise wie bei den Federgliedern 23 und 24 die Federglieder 31 und 32 rechtwinklig schneiden. Im übrigen gilt das im Zusammenhang mit dem U-förmigen Schlitz 16 Gesagte in sinngemäßer Weise auch für den U-förmigen Schlitz 17 mit seinen gerade verlaufenden Schenkeln und dem rechtwinklig zu der Längsachse sich erstreckenden geraden Basisabschnitt 35.

Diese Anordnung, die sehr robust ist, läßt sich in einfachster Weise dadurch herstellen, daß in die vorgefertigte Spannzangenaufnahmevorrichtung mit Hilfe von Kupferelektroden,die entsprechend geformt sind, die beiden U-förmigen Schlitze 16 und 17 einerodiert werden.

Die Verwendung der neuen Einstellvorrichtung geschieht in folgender Weise: Zunächst wird in die Spannzange 13 das jeweilige Werkzeug eingesetzt, wobei eine an dem Grund der kegeligen Bohrung 12 befindliche Einstellschraube 36 die Einstecktiefe des Werkzeugs in die Spannzangenaufnahmevorrichtung 1 festlegt. Nach dem Anziehen der Überwurfmutter 15 ist das Werkzeug in der Spannzangenaufnahmevorrichtung festgeklemmt, wobei sich wegen der Toleranzen zwischen der Lage der kegeligen Bohrung 12 und der zylindrischen Zentrierbohrung 5 ein Versatz zwischen der Werkzeugachse und dr zylindrischen Zentrierbohrung 5 ergibt. Um diesen Versatz zu kompensieren, d.h. die Achse des Werkzeugs auf null zu stellen, wird die Spannzangenvorrichtung mit dem aufgenommenen Werkzeug auf der Maschinenspindel oder einem Werkzeug-Voreinstellgerät montiert. Danach werden alle vier Feststellschrauben 27, 28, 34 gelockert und nun kann durch Festziehen der entsprechenden Feststellschraube an den beiden U-förmigen Schlitzen 16 und 17 die Werkzeugachse auf null gestellt werden.

Dabei stützt sich die entsprechende Feststellschraube 27, 28, 34 auf dem entsprechenden Widerlager 29 bzw. 33 ab, um das scheibenförmige Zwischenstück 18 bzw. das zylindrische Ende 9 zu der Seite der Längsachse zu drücken, auf der die jeweils betätigte Feststellschraube 27, 28, 34 liegt. Nachdem durch entsprechendes Betätigen jeweils einer der Feststellschrauben 27, 28, 34 aus dem Satz die Achse des eingesetzten Werkzeugs zu der Achse des Befestigungsflansches 2 auf null justiert ist, wird die entsprechende gegenüberliegende Feststellschraube 27, 28, 34 jedes Satzes gegen das Widerlager 29 und 33 festgeschraubt, so daß sich eine Konterung ergibt. Damit ist das Werkzeug in allen Richtungen justiert und kann auch durch seitlich auftretende Kräfte,von der Eigenelastizität abgesehen, nicht seitlich verdrückt werden.

## Patentansprüche

1. Einstellvorrichtung, insbesondere für Werkzeuge, wie Bohrer, Fräser, Gewindebohrer oder -fräser, Reibahlen und ähnliche rundlaufende Werkzeuge, mit einem ersten, eine zugehörige Längsachse aufweisenden Element (2) sowie einem zweiten, eine zugehörige Längsachse aufweisenden Element (9) und mit die beiden Elemente miteinander verbindenden Federgliedern (23, 24), durch die die beiden Elemente (2, 9) unter Beibehaltung des Winkels zwischen den Achsen gegeneinander zu versetzen sind, dadurch gekennzeichnet, daß die beiden Elemente (2, 9) durch ein prismatisches längliches Zwischenstück (8) miteinander verbunden sind, daß in dem länglichen Zwischenstück (8) wenigstens ein U-förmiger Schlitz (16) mit zwei zueinander parallelen Schenkeln (19, 21) enthalten ist, dessen Schenkel (19, 21) parallel zu der Längsachse des Elementes (2) verlaufen und dessen Basisabschnitt (22) rechtwinklig die Längsachse des Elementes (2) schneidet, daß die Schenkel (19, 21) und der Basisabschnitt (22) zwei bezüglich der Längsachse des Elementes (2) diametral liegende Seitenflächen schneiden, derart, daß die beiden ersten Federglieder (23, 24) und ein dazwischenliegendes Widerlagermittel (29) entstehen, und daß der Achsversatz mit Feststellmitteln (27, 28) eingestellt und fixiert wird, die sich an dem Widerlagermittel (29) abstützen.

2. Vorrichtung nach Anspruch 1, dadurch gekennzeichnet, daß zwei zweite Federglieder (31, 32) vorgesehen sind, die an dem anderen Element (9) sitzen und mit den ersten Federgliedern (23, 24) über ein Zwischenelement (18) verbunden sind, daß die zweiten Federglieder (31, 32) gegenüber den ersten Federgliedern (23, 24) um 90° um die Längsachse eines der Elemente (2, 9) gedreht angeordnet sind, und daß den mit Abstand voneinander angeordneten zweiten Federgliedern (31, 32) ein zweites Widerlagemittel (33) sowie Feststellmittel (34) zugeordnet sind.

3. Vorrichtung nach Anspruch 1 oder 2, dadurch gekennzeichnet, daß jedes Federglied (23, 24, 31, 32) in einer Ebene elastisch auslenkbar und in einer zu dieser Ebene rechtwinkligen, die Längsachse des Federgliedes (23, 24, 31, 32) enthaltenden Ebene starr ist.

4. Vorrichtung nach Anspruch 1 oder 2, dadurch gekennzeichnet, daß die Feststellmittel Schrauben (27, 28, 34) sind.

5. Vorrichtung nach Anspruch 4, dadurch gekennzeichnet, daß die Schrauben (27, 28, 34) in Gewindelöchern (25, 26) sitzen, die in den Federgliedern (23, 24, 31, 32) ausgebildet sind und sich paarweise auf gleicher Höhe bezüglich der Längsachse der Elemente (2, 9) befinden.

6. Vorrichtung nach Anspruch 1 oder 2, dadurch gekennzeichnet, daß die Federglieder (23, 24, 31, 32) mit den Elementen (2, 9) und/oder dem Zwischenelement (18) einstückig sind.

7. Vorrichtung nach Anspruch 1 oder 2, dadurch gekennzeichnet, daß die Widerlager (29, 31) mit den Elementen (2, 9) und/oder dem Zwischenelement (18) einstückig sind.

8. Vorrichtung nach Anspruch 1, dadurch gekennzeichnet, daß die beiden Schenkel (19, 21) symmetrisch zu der Längsachse des Elementes (2) angeordnet sind.

9. Vorrichtung nach den Ansprüchen 1 und 2, dadurch gekennzeichnet, daß in dem Zwischenstück (8) ein zweiter U-förmiger Schlitz (17) ausgebildet ist, der in Längsrichtung des Zwischenstückes gegenüber dem ersten Schlitz (16) versetzt und zu diesem vorzugsweise um 90° gekreuzt angeordnet ist, derart, daß ein von den beiden U-förmigen Schlitzen (16, 17) freies Zwischenelement entsteht und die Basisabschnitte (22, 35) der beiden U-förmigen Schlitze (16, 17) mit Abstand voneinander längs der Längsachse des Zwischenstückes (18) parallel zueinander verlaufen.

10. Vorrichtung nach Anspruch 1 oder 9, dadurch gekennzeichnet, daß der oder die Schlitze (16, 17) aus geraden Stücken zusammengesetzt sind.

11. Vorrichtung nach Anspruch 1, dadurch gekennzeichnet, daß das längliche Zwischenstück (8) zylindrisch ist.

## Revendications

1. Dispositif de réglage, notamment pour des outils tels que des forets, des fraises, des tarauds ou ou des fraises à tailler les filets, des alésoirs et des outils tournants similaires, comportant un premier élément (2) avec un axe longitudinal correspondant ainsi qu'un deuxième élément (9) avec un axe longitudinal correspondant et des organes élastiques (23, 24) qui relient entre eux les deux éléments et à l'aide desquels les deux éléments (2, 9) peuvent être décalés l'un par rapport à l'autre sans modification de l'angle formé par les deux axes, caractérisé par le fait que les deux éléments (2, 9) sont reliés entre eux par une pièce intermédiaire (8) allongée prismatique, que la pièce intermédiaire (8) allongée comporte au moins une fente (16) en U munie de deux côtés (19, 21) parallèles entre eux, dont les côtés (19, 21) sont parallèles à l'axe longitudinal de l'élément (2) et dont la base (22) coupe à angle droit l'axe longitudinal de l'élément (2), que les côtés (19, 21) et la base (22) coupent deux surfaces latérales disposées diamétralement par rapport à l'axe longitudinal de l'élément (2) de manière à former les deux premiers éléments élastiques (23, 24) et une butée (29) située entre ceux-ci et que le décalage entre les axes est réglé et fixé par des moyens de blocage (27, 28) qui prennent appui sur la butée (29).

2. Dispositif selon la revendication 1, caractérisé par le fait qu'il est prévu des deuxièmes éléments élastiques (31, 32) qui sont situés sur l'autre élément (9) et sont reliés aux premiers éléments élastiques (23, 24) par un élément intermédiaire (18), que les deuxièmes éléments élastiques (31, 32) sont tournés de 90 ° autour de l'axe longitudinal de l'un des éléments (2, 9) par rapport aux premiers éléments élastiques (23, 24) et par le fait qu'une deuxième butée (3) et des moyens de blocage (34) sont associés aux deuxièmes éléments élastiques (31, 32) éloignés l'un de l'autre.

3. Dispositif selon la revendication 1 ou 2, caractérisé par le fait que chaque élément élastique (23, 24, 31, 32) peut être déformé élastiquement dans un plan et est rigide dans un plan qui est perpendiculaire audit plan et contient l'axe longitudinal de l'élément élastique (23, 24, 31, 32).

4. Dispositif selon la revendication 1 ou 2, caractérisé par le fait que les moyens de blocage sont des vis (27, 28, 34).

5. Dispositif selon la revendication 4, caractérisé par le fait que les vis (27, 28, 34) sont engagées dans des taraudages (25, 26) qui sont prévus dans les éléments élastiques (23, 24, 31, 32) et sont situés deux à deux à la même hauteur par rapport à l'axe longitudinal des éléments (2, 9).

6. Dispositif selon la revendication 1 ou 2, caractérisé par le fait que les éléments élastiques (23, 24, 31, 32) forment un ensemble monobloc avec les éléments (2, 9) et/ou l'élément intermédiaire (18).

7. Dispositif selon la revendication 1 ou 2, caractérisé par le fait que les butées (29, 31) forment un ensemble monobloc avec les éléments (2, 9) et/ou l'élément intermédiaire (18).

8. Dispositif selon la revendication 1, caractérisé par le fait que les deux côtés (19, 21) sont disposés de manière symétrique par rapport à l'axe longitudinal de l'élément (2).

9. Dispositif selon les revendications 1 et 2, caractérisé par le fait qu'une deuxième fente (17) en U est aménagée dans la pièce intermédiaire (8), laquelle fente est décalée dans la direction longitudinale de la pièce intermédiaire par rapport à la première fente (16) et forme de préférence un angle de 90 ° avec celle-ci, de telle sorte que l'on obtient un élément intermédiaire ne comportant pas les deux fentes (16, 17) en U et que les bases (22, 35) des deux fentes (16, 17) en U sont éloignées l'une de l'autre et sont parallèles entre elles le long de l'axe longitudinal de l'élément intermédiaire (18).

10. Dispositif selon la revendication 1 ou 9, caractérisé par le fait que la ou les fentes (16, 17) sont formées par des parties rectilignes.

11. Dispositif selon la revendication 1, caractérisé par le fait que la pièce intermédiaire (8) allongée est cylindrique.

## Claims

1. An adjusting device, more particularly for tools, such as drills, milling cutters, tap drills or thread-milling tools , friction awls and similar rotary tools, having a first element (2) having an associated longitudinal axis and a second element (9) having an associated longitudinal axis and spring members (23, 24) which interconnect said two elements and by means of which the two elements (2, 9) can be offset in relation to one another, while maintaining the angle between the axes, characterized in that the two elements (2, 9) are interconnected via a prismatic elongate intermediate member (8), the elongate intermediate member (8) is formed with at least one U-shaped slot (16) which has two arms (19, 21) extending parallel with' one another and with the longitudinal axis of the first-mentioned element (2) and whose base portion (22) intersects the longitudinal axis of the first-mentioned element (2) at right angles, the arms (19, 21) and the base portion (22) so intersect two ' lateral surfaces lying diametrically in relation to the longitudinal axis of the first-mentioned element (2) that the two first spring members (23, 24) and an abutment means (29) disposed therebetween are produced, and the axial offset is adjusted and fixed by securing means (27, 28) which bear against the abutment means (29).

2. A device according to claim 1, characterized in that two second spring members (31, 32) are provided which are disposed on the second element (9) and are connected via an intermediate element (18) to the first spring members (23, 24), the second spring members (31, 32) are disposed in relation to the first spring members (23, 24) rotated through 90 ° around the longitudinal axis of one of the elements (2, 9), and a second abutment means (33) and securing means (34) are associated with the second spring members (31, 32) disposed at a distance from one another.

3. A device according to claims 1 or 2, characterized in that each spring member (23, 24, 31, 32) can be deflected resiliently in one plane and is rigid in a plane at right angles thereto which contains the longitudinal axis of the spring member (23, 24, 31, 32).

4. A device according to claims 1 or 2, characterized in that the securing means are screws (27, 28, 34).

5. A device according to claim 4, characterized in that the screws (27, 28, 34) are disposed in threaded holes (25, 26) formed in the spring members (23, 24, 31, 32) and situated in pairs at the same height in relation to the longitudinal axis of the elements (2, 9).

6. A device according to claims 1 or 2, characterized in that the spring members (23, 24, 31, 32) are unitary with the elements (2, 9) and/or the intermediate element (18).

7. A device according to claims 1 or 2, characterized in that the abutments (29, 31) are unitary with the elements (2, 9) and/or the intermediate element (18).

8. A device according to claim 8, characterized in that the two arms (19, 21) are disposed symetrically in relation to the longitudinal axis of the first element (2).

9. A device according to claims 1 or 2, characterized in that the intermediate member (8) is formed with a second U-shaped slot (17) which is so disposed offset in the longitudinal direction in relation'to the first slot (16) and preferably crossed through 90 ° in relation thereto that an intermediate element free from the two U-shaped slots (16, 17) is produced and the base portions (22, 35) of the two U-shaped slots (16, 17) is produced disposed parallel with and at a distance from one another along the longitudinal axis of the intermediate member (18).

10. A device according to claims 1 or 9, characterized in that the or each slot (16, 17) is made up of straight pieces.

11. A device according to claim 1, characterized in that the elongate intermediate member (8) is cylindrical.

Fig. 1

Fig. 2